# EUROPEAN PATENT SPECIFICATION

(11) **EP 1 091 849 B1**
(45) Date of publication and mention of the grant of the patent: **06.11.2002**
(21) Application number: 98920686.7
(22) Date of filing: 28.05.1998
(51) Int. Cl.: B32B 11/08

(54) **BITUMINOUS MEMBRANE**
BITUMINÖSE DICHTUNGSBAHN
MEMBRANE BITUMINEUSE

(43) Date of publication of application: 18.04.2001
(73) Proprietor: Aluzim Anstalt, 9490 Vaduz (LI)
(72) Inventor: ZIGERLIG, Max, CH-6598 Tenero (CH)
(74) Representative: Fiammenghi-Domenighetti, Delfina
(86) International application number: IB9800826
(87) International publication number: WO99061241

(56) References cited:
- US-A- 4 396 665
- US-A- 5 096 759

## Description

The present invention relates to a bituminous membrane. Bituminous membranes today find widespread application in many spheres, for the purpose of repairing and protecting, for example construction components in masonry, domestic fixtures and motor vehicles. Their versatility is largely due to the fact that they adhere very well to an extremely wide range of materials, such as wood, metal, asphalt, cement and the like, not to mention the fact that they can be applied in cold conditions and can thus be used by virtually anyone.

Membranes of this type mainly comprise a bitumen-based compound in which are present thermoplastic polymers and plasticizers, in synthetic or natural form. The main problems encountered by products of this type are varied in nature: it would be advantageous for them to have satisfactory mechanical properties, which would give them strength and dimensional stability; they would also need to be protected against natural deterioration due to exposure to atmospheric agents, and lastly it would be advantageous for them to have noteworthy plastic properties in order to retain the shape acquired when they are applied.

Attempts have been made to solve these problems over the years. It was initially thought to improve the mechanical properties of these membranes by burying inside the bituminous compound, or by binding thereto, a support consisting of a film with similar mechanical properties.

Following that, the membrane was given a surface sheet of aluminium, as described in US patents No. 3,770,559, and 4.396.665 which goes towards improving its aesthetic appearance and at the same time gives it protection against ageing caused by UV rays, ozone, oxygen or any other atmospheric agent.

The obvious development arising from these shrewd approaches has resulted in the emergence of bituminous membranes comprising both an internal support which improves its mechanical properties, and a surface film of aluminium, which extends its lifetime.

However, especially in the case of thin membranes, which are often used to join surfaces that are not co-planar, internal supports used have a tendency to resume their original flat shape, which could lead to detachment of the membrane from one of the surfaces involved.

In many cases, in order to avoid this type of elastic behaviour, it has thus been decided to dispense with the internal reinforcing support, thus leaving the aluminium film responsible for both the protective function and the enhancement of the mechanical properties of the membrane.

The result obtained is a durable product with excellent plastic behaviour but only modest mechanical properties.

Alternatively, by using a process which is widespread in the food sector and in the sector of flexible wrappings, membranes have been made in which a polyethylene support is bonded to the protective aluminium film rather than being inserted in the bituminous compound.

A multilayer membrane, described in US patent No. 5,096,759, was thus obtained, composed of a surface sheet of aluminium reinforced with a polyethylene support, bonded thereto by a polyurethane adhesive, underneath which are, in the following order, the bituminous compound and a sheet for protecting the adhesive surface.

This product has good mechanical properties and durability, but still has an elastoplastic behaviour which is unsatisfactory for the purposes for which this product is used. Actually, its elastic behaviour is substantially more pronounced than that of membranes in which the reinforcing film is inserted in the bituminous compound.

The object of the present invention is thus to eliminate the drawbacks mentioned above. The invention, as characterized by the claims, solves the problem of ensuring a satisfactory plastic behaviour.

One of the advantages afforded by the present invention consists essentially of the fact that even after a long period, the membrane thus produced does not have any undesired elastic recovery; in addition, it has excellent mechanical properties and durability.

The subject of the present invention consists of a bituminous membrane as described in the preamble of the attached Claim 1, characterized by the characterizing part of that claim.

The technical characteristics of the invention, according to the abovementioned objects, can clearly be gathered from the content of the subsequent claims and the advantages of this invention will become more clearly apparent in the detailed description which follows, which is given with reference to the attached drawings, which represent a non-limiting and purely illustrative embodiment thereof, in which:
- Figure 1 illustrates the cross-section of a membrane according to the invention;
- Figure 2 illustrates the cross-section of a membrane according to the prior art;
- Figure 3 illustrates the invention subjected to an elastic return test and the relevant apparatus;
- Figure 3a shows the profile of the test pieces subjected to the abovementioned test;
- Figures 4 to 7 illustrate, in the form of tables, the results of the test mentioned in Figures 3 and 3a.

The invention relates to a bituminous membrane.

The inventor of the present invention has carried out an analysis directed towards clarifying the the reasons for which a membrane as described above, i.e. coated according to the current dictates of the art, might have the abovementioned drawback of not being able to be bent so as to perfectly fit irregular surfaces, on account of its elastic "return", and has arrived at the conclusion that this return is caused by the elastic reaction formed by the supporting and reinforcing sheet of synthetic resin.

This reaction in turn arises from compression and/or tension on the outermost fibres of the film caused by the flexure imparted to the membrane to make it adhere to the said irregular surfaces. Since, as is known, the value of the flexure-derived stresses acting on the fibres depends on the distance of these fibres from the neutral axis of the flexed body, the inventor set himself the aim of reducing this distance to the minimum possible value and concluded that, to this end, another film of aluminium, identical in thickness to that of the abovementioned first film, needs to be applied by bonding, also to the opposite face of the film of synthetic resin, in order to ensure that the neutral axis of a section of the entire membrane lies on the median plane of this membrane: in this way, the fibres of the film of synthetic resin which are under the most stress, i.e. those most distant from the neutral axis, are distant therefrom by only half the thickness of the film.

Since, in these applications, this thickness is of the order of one-twentieth of a µm, the resultants of the tensile and compression stresses acting on the fibres, which give rise to the abovementioned elastic reaction, thus have such a low value, which can be contrasted with the actual weight of the membrane and/or its flexural strength, which is also dependent on its profile derived from the shape of the surface onto which it is made to adhere.

A membrane is thus obtained with essentially "plastic" behaviour, with the consequent advantage of being able to be applied in a reliable manner with maximum adhesion to the surfaces to be coated. (As regards their physical properties, both the sheets of aluminium and the layer of bituminous compounds have been considered as having no influence on the elasticity of the membrane).

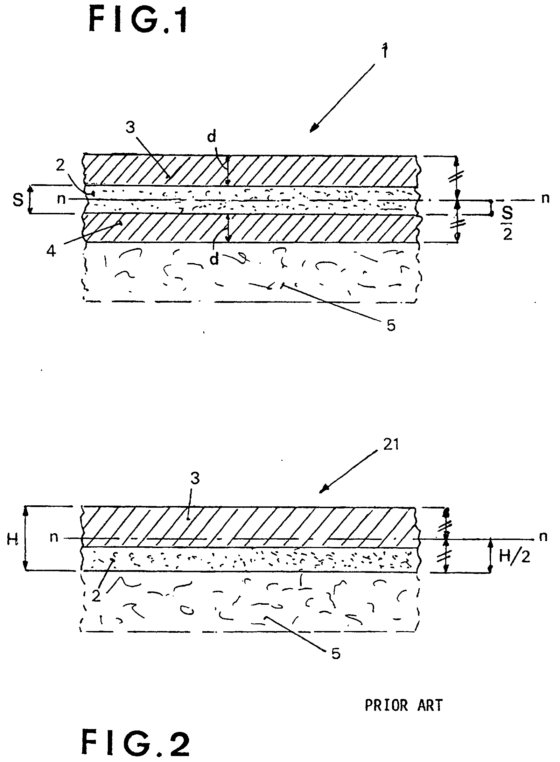

Figure 2 shows the cross-section of a membrane 21 according to the prior art, in which a single metal film 3, generally made of aluminium, is bonded to a film of synthetic resin 2.

In the figure, the position of the neutral axis n-n and the maximum distance therefrom of the fibres of the film of synthetic resin 2 which are under the greatest stress, this distance being equal to half the thickness H of the entire membrane, can be seen. In addition, the entire cross-section of the film of resin works under compression or under tension.

Figure 1 is a cross-section of a membrane according to the present invention, in which two films of aluminium 3,4 of equal thickness d are bonded to the opposite faces of a film of synthetic resin 2 equal in thickness S to that of the film of Figure 1.

Since all the films 2, 3, 4 are joined together by bonding, the neutral axis n-n is located as shown, i.e. on the median plane of the film of synthetic resin 2, and the fibres of this film which are under the greatest flexural stress are at the smallest possible distance from the neutral axis n-n, equal to 5/2, i.e. to half the thickness S of the film of synthetic resin 2.

In addition, half of the film of synthetic resin 2 is subjected to tension, and half to compression.

In this way, the result which the inventor intended to achieve is obtained.

Figures 1, 2 also show a sheet 5 of bituminous compound, applied directly either to the supporting and reinforcing film of synthetic resin 2 according to the prior art, or to the innermost film of aluminium 4 according to the present invention.

An antiadhesive protective sheet, for example a siliconated sheet, not represented in the figures since it is well known to the those familiar with this technological field, is usually applied to the outermost face of the film of bituminous compound.

Among the many films of synthetic resin 2 which can be used for this purpose, a preferred solution performed envisages the use of polyester, nylon 6 or polyethylene, whereas, for the bituminous compound 5, it is recommended to use a composition comprising 75% 180/200 bitumen, 15% SBR, (styrene-butadiene-rubber: sold, for example, under the name Finaprene 411X) and 10% plasticizers and resins, in approximately equal parts.

The inventor recommends the use of two films of aluminium 3, 4 and one film of synthetic resin 2, all three having an identical thickness equal to 20 µm.

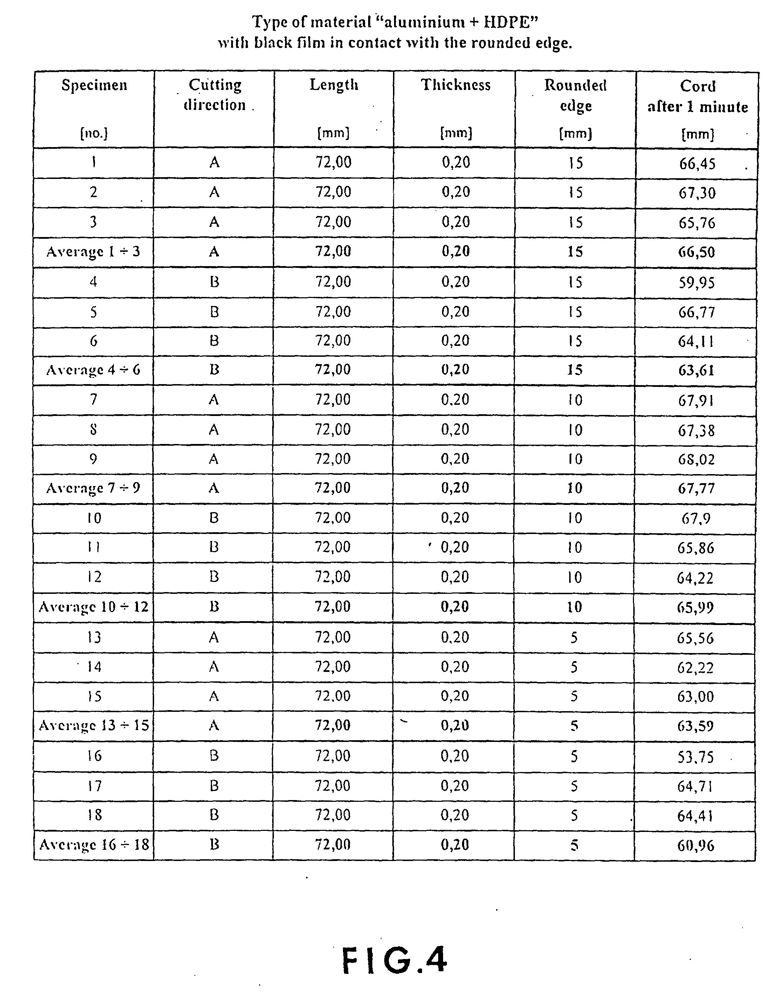

The plasticity of the membrane thus obtained is demonstrated by laboratory test analyses carried out by a specialized institute, the results of which are attached in Figures 4 to 7.

The tests were carried out on various samples of bituminous membrane consisting of portions of aluminium film joined with synthetic films.

For the various types of material examined, rectangular test pieces 6, 70 × 25 mm in size and with thicknesses corresponding to the type of material were prepared, half of which were cut along a direction and the other half cut in a direction perpendicular to the first.

Apparatus for determining the cold flexibility in accordance wich the indications of UNI standard 8202, Section XV, was used to carry out the test, this apparatus including bending mandrels 7, (15, 10 and 5 mm in diameter), as well as a centesimal digital gauge with 0.1 mm definition.

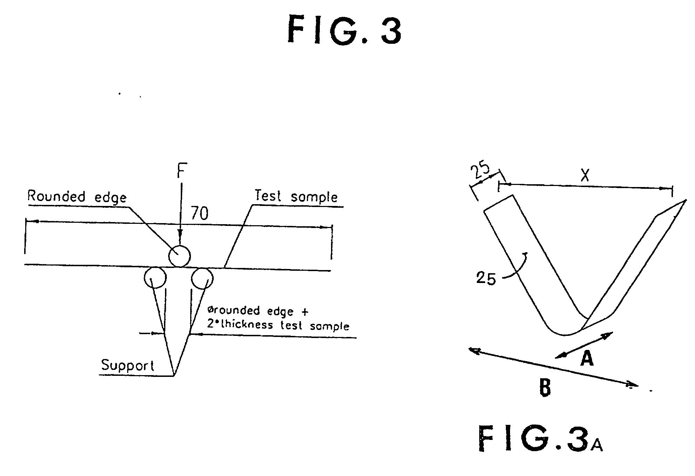

After they had been conditioned at the laboratory temperature, of between 10 and 23°C, for 24 hours, the test pieces 6, placed on supports 8, were bent into a "U" shape by means of the abovementioned apparatus, using mandrels 7 of different diameter, acting with a force F, in the manner represented schematically in Figure 3. One minute after bending, the distance "X" between the upper arms of the test piece was measured, as indicated in Fig. 3A.

The results relating to a sample consisting of aluminium and HDPE (high density polyethylene), corresponding to the subject of US patent No. 5,096,759, were tabulated in Figure 4: as can be seen, the result obtained is relatively, independent of the direction in which the test pieces were cut (A or B) and of the dimensions of the mandrel used.

The elastic return is large and the chord "X" measured is between 70 and 78% of the original length of the test piece.

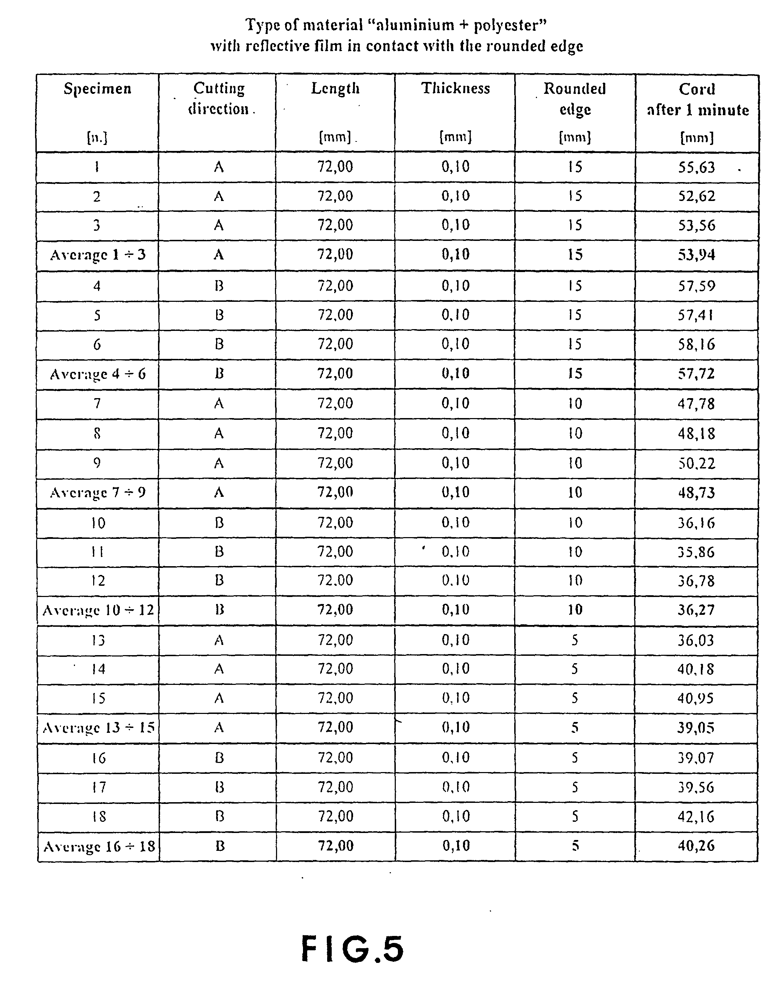

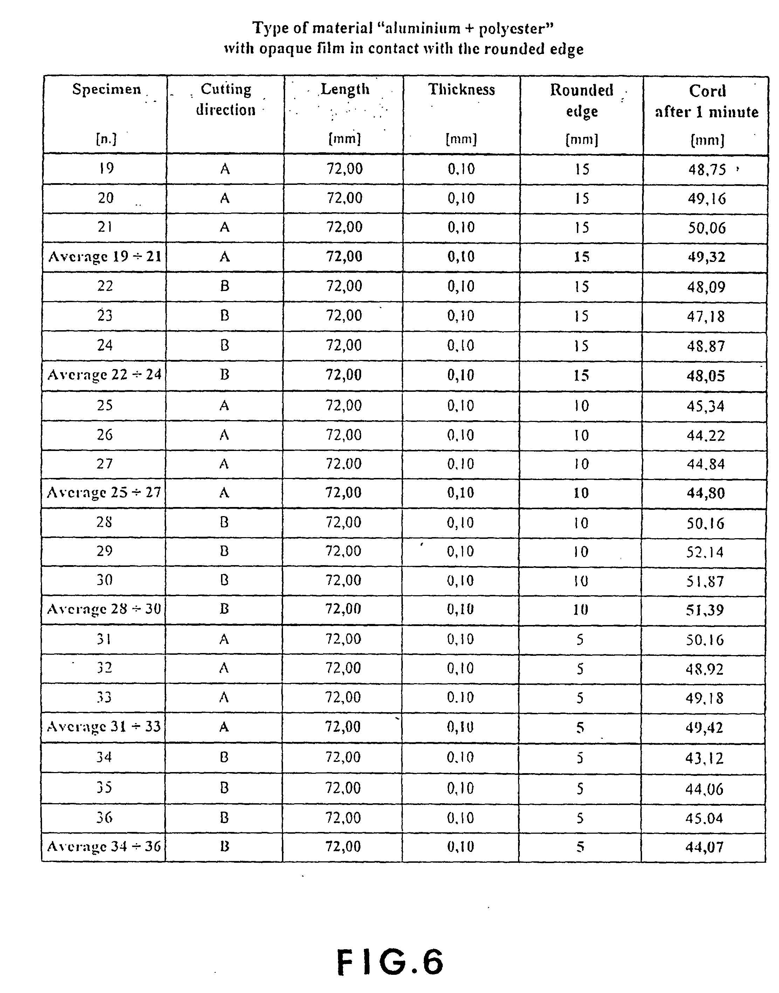

Figures 5 and 6 show the results of tests on two test pieces 25 consisting of a film of aluminium and polyester: in the first case, the aluminium surface is placed in contact with the mandrel, in the second case the polyester surface is placed in contact.

With reference to the average values here also, the tests carried out with aluminium in contact with the mandrel give fairly uniform results, gradually improving as the size of the mandrel decreases, for the samples cut in the direction A.

For the samples cut in the direction B, distinctly plastic behaviour is observed using a 10 mm mandrel: indeed, in this case, the sample has a return of slightly over 50%. When the polyester surface is placed in contact with the mandrel, almost constant behaviour is observed, both in terms of the orientation of cutting of the sample and in terms of the size of the mandrel: the best result obtained in this case gives a return of about 60%.

However, it should be pointed out that even the best result obtained in these tests, achieved with a sample made of aluminium and polyester, in which the aluminium is placed in contact with the 10 mm mandrel, has only a remote possibility of application, since membranes of this type are always bended with the aluminium surface facing outwards.

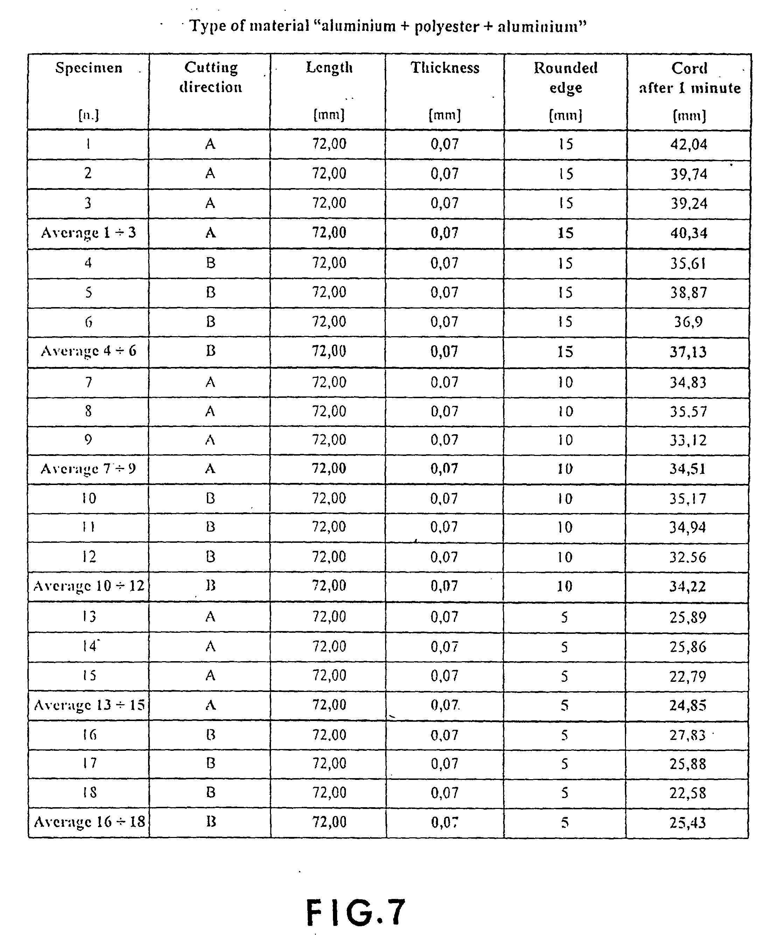

Lastly, Figure 7 shows the results of the tests relating to the membrane which is the subject of the present invention: as can be seen, these results are essentially independent of the direction of cutting and improve substantially as the size of the mandrel decreases, until elastic returns of between 25 and 30% are reached, which indicate its distinctly plastic behaviour.

## Claims

1. Bituminous membrane (1) comprising a sheet (5) of a bituminous compound onto which is placed a layer composed by a film of metallic material (3) bonded to one face of a supporting and reinforcing film (2) made of synthetic resin, **characterized in that** on the opposite side of the supporting and reinforcing film (2) made of synthetic resin is applied, by bonding, another film (4) of metallic material with a thickness (d) equal to that of the said metal film (3) applied to the other face.

2. Membrane according to Claim 1, in which the said two films (3,4) of metallic material are made of aluminium.

3. Membrane according to either of the preceding claims, in which the said supporting and reinforcing film (2) is made of polyester.

4. Membrane according to either of Claims 1 and 2, in which the said supporting and reinforcing film (2) is made of nylon 6.

5. Membrane according to either of Claims 1 and 2, in which the said supporting and reinforcing film (2) is made of polyethylene.

6. Membrane according to any one of the preceding claims, in which the said sheet (5) of bituminous compound comprises 75% 180/200 bitumen, 15% SBR and 10% plasticizers and resins.

7. Membrane according to one of the preceding claims, in which both the two said films (3,4) of metallic material and the said supporting and reinforcing film (2) made of synthetic resin have a thickness of 20 µm.

## Patentansprüche

1. Bituminöse Dichtungsbahn (1) mit einer blattförmigen Lage (5) aus einer bituminösen Zusammensetzung, auf die eine Lage eines Films metallischen Materials (3) aufgebracht ist, der auf einer Seite eines tragenden und verstärkenden Films (2) aus synthetischem Harz haftet,
**dadurch gekennzeichnet,**
**daß** auf der entgegengesetzten Seite des tragenden und verstärkenden Films (2) aus synthetischem Harz durch Kleben ein anderer Film (4) metallischen Materials mit einer Dicke d gleich der des auf der anderen Seite aufgebrachten metallischen Films (3) aufgebracht ist.

2. Dichtungsbahn nach Anspruch 1, in der die zwei Filme (3, 4) metallischen Materials aus Aluminium hergestellt sind.

3. Dichtungsbahn nach einem der vorhergehenden Ansprüche, in der der tragende und verstärkende Film (2) aus Polyester hergestellt ist.

4. Dichtungsbahn nach Anspruch 1 oder 2, in der der tragende und verstärkende Film (2) aus Nylon 6 hergestellt ist.

5. Dichtungsbahn nach Anspruch 1 oder 2, in der der tragende und verstärkende Film (2) aus Polyethylen hergestellt ist.

6. Dichtungsbahn nach einem der vorhergehenden Ansprüche, in der die blattförmige Lage (5) bituminöser Zusammensetzung 75 % 180/200-Bitumen, 15 % SBR und 10 % Plastiziermittel und Harze aufweist.

7. Dichtungsbahn nach einem der vorhergehenden Ansprüche, in der sowohl die zwei Filme (3, 4) aus metallischem Material als auch der tragende und verstärkende Film (2), der aus synthetischem Harz hergestellt ist, eine Dicke von 20 µm haben.

## Revendications

1. Membrane bitumineuse (1) comprenant une feuille (5) d'un composé bitumineux sur laquelle est placée une couche composée d'un film de matériau métallique (3) collé sur une face d'un film (2) de support et de renfort en résine synthétique, **caractérisée en ce que** sur la face opposée du film de support et de renfort (2) en résine synthétique est appliqué, par collage, un autre film (4) de matériau métallique d'une épaisseur (d) égale à celle du dit film métallique (3) appliqué sur l'autre face.

2. Membrane selon la revendication 1, dans laquelle lesdits deux films (3, 4) de matériau métallique sont en aluminium.

3. Membrane selon l'une quelconque des revendications précédentes, dans laquelle ledit film de support et de renfort (2) est en polyester.

4. Membrane selon l'une quelconque des revendications 1 et 2, dans laquelle ledit film de support et de renfort (2) est en nylon 6.

5. Membrane selon l'une quelconque des revendications 1 et 2, dans laquelle ledit film de support et de renfort (2) est en polyéthylène.

6. Membrane selon l'une quelconque des revendications précédentes, dans laquelle ladite feuille (5) de composé bitumineux comprend 75% de bitume 180/200, 15% de SBR et 10% de plastifiants et de résines.

7. Membrane selon l'une des revendications précédentes, dans laquelle lesdits deux films (3, 4) de matériau métallique et ledit film de support et de renfort (2) en résine synthétique ont une épaisseur de 20µm.
